# EUROPEAN PATENT APPLICATION

(11) **EP 4 841 240 A1**
(43) Date of publication of application: **18.11.2026**
(21) Application number: 24923754.6
(22) Date of filing: 20.12.2024
(51) Int. Cl.: G01N 21/21, G01N 21/19, G01N 21/27

(54) **OPTICAL MEASUREMENT DEVICE, DATA MANAGEMENT METHOD FOR OPTICAL MEASUREMENT DEVICE, AND DATA MANAGEMENT PROGRAM FOR OPTICAL MEASUREMENT DEVICE**

(30) Priority: 05.02.2024 JP 2024015560
(71) Applicant: JASCO Corporation, Hachioji-shi Tokyo 192-8537 (JP)
(72) Inventor: NAKATSUKASA Ryuta, Hachioji-shi, Tokyo 192-8537 (JP); MIYOSHI Yuichi, Hachioji-shi, Tokyo 192-8537 (JP)
(74) Representative: Henkel & Partner mbB
(86) International application number: PCT/JP2024/045158
(87) International publication number: WO 2025/169622

(57) **Abstract**

This optical measurement device is capable of: storing history data in which are combined measurement data obtained by measuring the optical characteristics of a sample, using a measurement means, and management information of a plurality of components to be managed which are detachably attached to a body of the optical measurement device; and tracking the history data when the history data is used or required. The optical measurement device comprises: a plurality of recording means that are respectively attached to a plurality of components to be managed so as to respectively record management information of the components to be managed; a plurality of reading means that are respectively disposed at positions where the recording means are attached to the components to be managed so as to respectively read the management information recorded in the recording means when the components to be managed are mounted on the body of the optical measurement device or when the components to be managed are mounted on the body of the optical measurement device and measurement is performed by the measurement means; and a storage means that stores history data in which the read management information and the measurement data obtained by the measurement performed by the measurement means are combined.

## Description

### Related Application

This application claims the priority of Japanese Patent Application No. 2024-15560 filed on February 5, 2024, the disclosure of which is incorporated herein by reference in its entirety.

### Technical Field

The present invention relates to an optical measurement apparatus, a data management method of the optical measurement apparatus, and a data management program of the optical measurement apparatus, capable of ensuring strict traceability demanded in the pharmaceutical industry.

### Background Art

In the pharmaceutical industry, due to the nature of pharmaceuticals being related to life and health of human, it is necessary to comply with strict standards and criteria called GxP (Good x practice), and optical measurement apparatuses such as polarimeters that are used for manufacturing or managing pharmaceuticals must be verified to operate accurately upon delivery or regularly. Moreover, in the pharmaceutical industry, when abnormality is found in manufactured pharmaceuticals, the cause of the abnormality in the pharmaceuticals must be investigated fundamentally, so that strict traceability needs to be ensured for measurement data of optical measurement apparatuses such as polarimeters and management information of managed components.

Therefore, Patent Literature 1, for example, discloses that, to a cell wall of a cuvette (may be referred to as a "cell" hereinafter) of a polarimeter, an information presenter in which information of a cell (geometry data such as length, diameter, used material or the like), cell temperature, and calibration information of the cell are recorded is fixed, and when the cell is mounted on a polarimeter, information recorded in the information presenter is read out by a data receiver and transferred to a control system.

### Citation List

### Patent Literature

Patent Literature 1: US Patent No. 8,908,179

### Summary of Invention

### Technical Problem

In the technique described in Patent Literature 1, however, the managed component is only the cell of the polarimeter, and historical data that is combined with management information of multiple managed components mounted detachably on the main body of the polarimeter other than the cell and the measurement data measured with a measurement means of the polarimeter is not stored, so that it is extremely difficult to ensure strict traceability demanded in the pharmaceutical industry.

The object of the present invention is to solve the above-described problems and achieve the following objects. That is, the object of the present invention is to provide an optical measurement apparatus, a data management method of the optical measurement apparatus, and a data management program of the optical measurement apparatus, capable of ensuring strict traceability demanded in the pharmaceutical industry.

### Solution to Problem

An optical measurement apparatus that is disclosed in the present invention is an optical measurement apparatus that stores historical data that is combined with measurement data obtained by measuring an optical property of a sample with a measurement means of the optical measurement apparatus and management information of multiple managed components mounted detachably on a main body of the optical measurement apparatus, and can trace the historical data when the historical data is used or needed, the optical measurement apparatus comprises:
multiple recording means attached to the multiple managed components for recording, in each of the multiple recording means, the management information of the managed component to which the recording means is attached;
multiple reading means disposed at positions corresponding to positions where the multiple recording means of the multiple managed components are attached, wherein each of the multiple reading means reads out the management information recorded in the recording means attached to the position corresponding to the position where the reading means is disposed, when the managed component is mounted on the main body of the optical measurement apparatus or when measurement is performed with the measurement means while the managed component is mounted on the main body of the optical measurement apparatus; and
a storage means for storing the historical data that is combined with the read-out management information and the measurement data measured with the measurement means.

In one aspect of the present invention, the multiple managed components are preferably two or more selected from a light source, a filter, a standard sample, a cell, a thermometer, and an accessory.

In one aspect of the present invention, the management information is preferably at least one selected from a unique number of the managed component, an expiration date of the managed component, an exchange date and time of the managed component, information of a person who exchanged the managed component, calibration information of the standard sample, calibration information of the thermometer, and calibration information of the cell.

In one aspect of the present invention, the multiple recording means are preferably any of a one-dimensional code, a two-dimensional code, an RFID tag, and an EEPROM.

In one aspect of the present invention, the multiple reading means are preferably any of a barcode reader, an RFID reader, an optical camera, and a reading apparatus.

In one aspect of the present invention, the time when the historical data is used or needed is preferably any of at daily inspection, at periodic inspection, at qualification test, when the managed component is exchanged, when the standard sample is calibrated, when repaired, and when the historical data is requested by a user.

In one aspect of the present invention, it is preferred to comprise a providing means for providing the corresponding historical data when the historical data is used or needed.

In one aspect of the present invention, providing of the historical data is preferably display of the historical data on a screen of the optical measurement apparatus and warning regarding the historical data, or display of the historical data and warning regarding the historical data on a portable terminal.

In one aspect of the present invention, the historical data is preferably stored in the storage means in no changes allowed state.

A data management method for an optical measurement apparatus disclosed in the present invention is a data management method of the optical measurement apparatus that stores historical data that is combined with measurement data obtained by measuring an optical property of a sample with a measurement means of the optical measurement apparatus and management information of multiple managed components mounted detachably on a main body of the optical measurement apparatus, and can trace the historical data when the historical data is used or needed, the data management method comprises:
a recording step of recording, in each of multiple recording means attached to the multiple managed components, the management information of the managed component to which the recording means is attached;
a reading step of reading out, by each of multiple reading means disposed at positions corresponding to positions where the multiple recording means of the multiple managed components are attached, the management information recorded in the recording means attached to the position corresponding to the position where the reading means is disposed, when the managed component is mounted on the main body of the optical measurement apparatus or when measurement is performed with the measurement means while the managed component is mounted on the main body of the optical measurement apparatus; and
a storing step of storing the historical data that is combined with the read-out management information and the measurement data measured with the measurement means.

A data management program for an optical measurement apparatus disclosed in the present invention is a data management program of an optical measurement apparatus that stores historical data that is combined with measurement data obtained by measuring an optical property of a sample with a measurement means of the optical measurement apparatus and management information of multiple managed components mounted detachably on a main body of the optical measurement apparatus, and can trace the historical data when the historical data is used or needed, the data management program causing a computer to execute processing of:
recording, in each of multiple recording means attached to the multiple managed components, the management information of the managed component to which the recording means is attached;
reading out, by each of multiple reading means disposed at positions corresponding to positions where the multiple recording means of the multiple managed components are attached, the management information recorded in the recording means attached to the position corresponding to the position where the reading means is disposed, when the managed component is mounted on the main body of the optical measurement apparatus or when measurement is performed with the measurement means while the managed component is mounted on the main body of the optical measurement apparatus; and
storing the historical data that is combined with the read-out management information and the measurement data measured with the measurement means.

### Advantageous Effects of Invention

According to the present invention, an optical measurement apparatus, a data management method of the optical measurement apparatus, and a data management program of the optical measurement apparatus capable of solving the conventional above-described problems, achieving the above-identified objects, and ensuring strict traceability demanded in the pharmaceutical industry can be provided.

### Brief Description of Drawings

Figure 1 shows an example of hardware configuration of an optical measurement apparatus of the present invention.
Figure 2 shows an example of functional configuration of the optical measurement apparatus of the present invention.
Figure 3 is a flowchart that shows an example of a flow of processing in a data management method of the optical measurement apparatus of the present invention.
Figure 4 is a schematic diagram of a polarimeter that is an embodiment of the optical measurement apparatus of the present invention.
Figure 5 is a schematic diagram showing an optical rotation plate, which is an example of a managed component of a polarimeter, a recording means, and a reading means.
Figure 6 is a schematic diagram showing a thermometer, which is an example of a managed component of a polarimeter, a recording means, and a reading means.
Figure 7 is a schematic diagram showing a cell, which is an example of a managed component of a polarimeter, a recording means, and a reading means.
Figure 8 is a schematic diagram showing an accessory, which is an example of a managed component of a polarimeter, a recording means, and a reading means.

### Description of Embodiments

### (Optical measurement apparatus and Data management method of Optical measurement apparatus)

An optical measurement apparatus of the present invention is an optical measurement apparatus that stores historical data that is combined with measurement data obtained by measuring an optical property of a sample with a measurement means of the optical measurement apparatus and management information of multiple managed components mounted detachably on the main body of the optical measurement apparatus, and can trace the historical data when the historical data is used or needed, has a recording means, a reading means, and a storing means, preferably has the measurement means and a providing means, and further has other means as necessary.

A data management method of the optical measurement apparatus of the present invention is a data management method of the optical measurement apparatus that stores the historical data that is combined with the measurement data obtained by measuring the optical property of the sample with the measurement means of the optical measurement apparatus and the management information of the multiple managed components mounted detachably on the main body of the optical measurement apparatus, and can trace the historical data when the historical data is used or needed, comprises a recording step, a reading step, and a storing step, preferably comprises a measuring step and a providing step, and further comprises other steps as necessary.

According to the optical measurement apparatus of the present invention and the data management method of the optical measurement apparatus of the present invention, the historical data that is combined with the measurement data obtained by measuring the optical property of the sample with the measurement means of the optical measurement apparatus and the management information of the multiple managed components mounted detachably on the main body of the optical measurement apparatus can be stored and the historical data can be traced (provided) when the historical data is used or needed, so that strict traceability demanded in the pharmaceutical industry can be ensured, and human errors such as input errors of the management information of the managed component, mix-up upon exchanging the managed component, expiration of calibration time-limit, expiration of exchange time-limit of the managed component, and mistake upon purchase order of the managed component can be prevented.

### <Types of Optical measurement apparatus>

The optical measurement apparatus is not particularly limited so long as it is an apparatus used in the pharmaceutical industry in which strict traceability is demanded, and can be suitably selected depending on the purpose; and examples thereof include a polarimeter, a circular dichroism spectrometer, a linear dichroism spectrometer, a birefringence measurement apparatus, a polarization measurement apparatus, a Raman spectrometer, an Ultraviolet-Visible-Near Infrared spectrometer, an infrared spectrometer, and a fluorescence spectrometer.

### <Managed component>

When one particular managed component is to be managed among the managed components that are detachably mounted on the main body of the optical measurement apparatus, strict traceability demanded in the pharmaceutical industry cannot be ensured; therefore, multiple managed components that are detachably mounted on the main body of the optical measurement apparatus are to be managed.

Here, the multiple managed components indicate two or more managed components that are detachably mounted on the main body of the optical measurement apparatus, and types of the managed components do not matter, so that there may be multiple managed components of the same type. Moreover, the multiple managed components are preferably three or more, further preferably the majority of the managed components (60% or greater of the total managed components; six or more of the managed components when there are ten managed components in total), and particularly preferably all of the managed components.

The managed component that is detachably mounted on the main body of the optical measurement apparatus does not include a component that is attached to the main body of the optical measurement apparatus when the apparatus is manufactured and is a long-life component that is not exchanged as a rule (for example, a rotation means, a display, a computer, etc.), and one that is integrated with the main body of the optical measurement apparatus.

The managed component is mounted detachably on the main body of the optical measurement apparatus, is a component that configures the optical measurement apparatus, is suitably selected depending on the type of the optical measurement apparatus, and examples thereof include a light source, a filter, a standard sample, a cell, a thermometer, and an accessory.

The light source can be suitably selected depending on the type of the optical measurement apparatus, and examples thereof include an LED (Light-Emitting Diode), a sodium lamp, a halogen lamp, and a combination of a sodium lamp and a mercury lamp.

The filter can be suitably selected depending on the type of the optical measurement apparatus, and examples thereof include an interference filter, a polarizer, and an analyzer.

The standard sample is a sample that is measured regularly to confirm whether the optical measurement apparatus shows a correct measurement value, can be suitably selected depending on the type of the optical measurement apparatus, and examples thereof include an optical rotation plate of a polarimeter, a standard polystyrene film of an infrared spectrometer, an optical filter for calibration of an Ultraviolet-Visible-Near Infrared spectrometer.

The cell is a container for filling with a sample, and examples thereof include a glass cell, a quartz cell, a flow cell, and a stainless (SUS) cell. The glass cell is used for measurements in the visible range at wavelengths of 340 nm or greater since it does not readily transmit ultraviolet light with a wavelength of 340 nm or lower. On the other hand, although the quartz cell transmits light of all wavelengths of ultraviolet and visible range, it is mainly used for measuring ultraviolet range since it is expensive.

Examples of the thermometer for measuring temperature of the cell, temperature of the sample in the cell, temperature of a cell holder, and temperature of the optical rotation plate include a temperature probe, a thermocouple, and a temperature sensor.

The accessory can be suitably selected depending on the type of the optical measurement apparatus, and examples thereof include the cell holder. Examples of the cell holder include a Peltier cell holder, a constant-temperature cell holder, and a cell holder for measurement of a small volume.

When the optical measurement apparatus is a polarimeter, examples of the managed component include a light source, a filter (an interference filter, a polarizer, an analyzer), a cell, a standard sample (an optical rotation plate), an accessory (a cell holder), a modulator, and a detector.

As for the polarimeter, although a standard sample solution such as a sucrose solution of which an optical rotation is known in advance is used as the standard sample to maintain measurement accuracy of the optical rotation, the optical rotation plate is preferably used since it is time consuming to prepare multiple standard sample solutions of different angles of optical rotation, and an error of a certain extent occurs in the optical rotation upon preparing the standard sample solution.

An optical rotation plate of which the optical rotation at a wavelength of 589 nm is correctly measured with a standard polarimeter that is calibrated in a primary standard of NIST (National Institute of Standards and Technology; the National Metrology Institute for the United States) or PTB (Physikalisch-Technische Bundesanstalt; Germany's National Metrology Institute), and assigned (calibrated) is used.

When the optical measurement apparatus is a circular dichroism spectrometer, examples of the managed component include a light source, a filter, a cell, a standard sample, a cell holder, a detector, and an accessory.

When the optical measurement apparatus is a Raman spectrometer, examples of the managed component include a light source, a filter, a cell, a standard sample (a standard polystyrene film), a cell holder, a diffraction grating, a detector, and an accessory.

When the optical measurement apparatus is an Ultraviolet-Visible-Near Infrared spectrometer, examples of the managed component include a light source, a filter, a cell, a standard sample (an optical filter for calibration), a detector, and an accessory.

When the optical measurement apparatus is an infrared spectrometer, examples of the managed component include a light source, a filter, a cell, a standard sample (a standard polystyrene film), a detector, and an accessory.

### <Management information>

The management information is information that needs to be managed in the managed component, can be suitably selected depending on the type of the managed component, and examples thereof include a unique number of the managed component, an expiration date of the managed component, an exchange date and time of the managed component, information of a person who exchanged the managed component, calibration information of the standard sample, calibration information of the thermometer, and calibration information of the cell.

The unique number of the managed component is an individual number that is uniquely given for each managed component by a manufacturer of the optical measurement apparatus, and may also be referred to as a serial number.

The expiration date of the managed component represents a product lifetime of the managed component, and technical data published by a manufacturer of the managed component can be used as the expiration date.

The exchange date and time of the managed component is a date and time when the managed component is exchanged.

The information of the person who exchanged the managed component is a name of a person in charge who exchanged the managed component.

When the reason for exchanging the managed component is other than the expiration date of the managed component, the reason for exchanging the managed component can also be recorded.

Examples of the management information in a case where the managed component is the light source include a type of the light source, a unique number of the light source, an expiration date of the light source, an exchange date and time of the light source, and information of a person who exchanged the light source.

When the optical measurement apparatus is a polarimeter, examples of a type of the light source include an LED (Light-Emitting Diode), a sodium lamp, a halogen lamp, and a combination of a sodium lamp and a mercury lamp.

Examples of the management information in a case where the managed component is the filter include a type of the filter, a unique number of the filter, an expiration date of the filter, an exchange date and time of the filter, and information of a person who exchanged the filter.

When the optical measurement apparatus is a polarimeter, examples of the filter include an interference filter, a polarizer, and an analyzer.

Examples of the management information in a case where the managed component is the filter include a type of the accessory, a unique number of the accessory, an expiration date of the accessory, an exchange date and time of the accessory, and information of a person who exchanged the accessory.

When the optical measurement apparatus is a polarimeter, examples of the accessory include a cell holder. Examples of the type of the cell holder include a Peltier cell holder, a constant-temperature cell holder, and a cell holder for measurement of a small volume.

For the standard sample, the cell, and the thermometer, which are managed components requiring regular calibration, the following calibration information is recorded in the recording means.

Examples of the calibration information of the standard sample include a type of the standard sample, a unique number of the standard sample, a calibration value of the standard sample, calibration date and time of the standard sample, a calibration time-limit of the standard sample, information of a person who calibrated the standard sample, and exchange date and time of the standard sample.

The type of the standard sample can be suitably selected depending on the type of the optical measurement apparatus, and examples thereof include an optical rotation plate when the optical measurement apparatus is a polarimeter, a standard polystyrene film when the optical measurement apparatus is a Raman spectrometer and an infrared spectrometer, and an optical filter for calibration when the optical measurement apparatus is an Ultraviolet-Visible-Near Infrared spectrometer.

The unique number of the standard sample is an individual number that is uniquely given for each standard sample by a manufacturer of the standard sample, and may also be referred to as a serial number.

The calibration value of the standard sample is a value obtained when the standard sample is calibrated, and examples thereof include an optical rotation in an optical rotation plate for a polarimeter, wavenumbers in a standard polystyrene film for an infrared spectrometer, and transmittance (absorbance) in an optical filter for calibration for an Ultraviolet-Visible-Near Infrared spectrometer.

The calibration date and time of the standard sample is a date and time when the standard sample is calibrated.

The calibration time-limit of the standard sample is a time limit for performing the next calibration of the standard sample, and is usually determined and managed by a user.

The information of the person who calibrated the standard sample is a name of a person in charge who performed calibration of the standard sample.

The exchange date and time of the standard sample is a date and time when the standard sample is exchanged.

Examples of the calibration information of the cell include a type of the cell, a unique number of the cell, temperature of the cell, a calibration value of an optical path length of the cell, a calibration date and time of an optical path length of the cell, a calibration time-limit of an optical path length of the cell, information of a person who calibrated an optical path length of the cell, and an exchange date and time of the cell.

The thermometer needs to be calibrated to manage accuracy of temperature measurement regularly or when needed.

Examples of the calibration information of the thermometer include a type of the thermometer, a unique number of the thermometer, a calibration value of the thermometer, a calibration date and time of the thermometer, a calibration time-limit of the thermometer, information of a person who calibrated the thermometer, and an exchange date and time of the thermometer.

### <Recording step and Recording means>

The recording step is a step of recording, in each of multiple recording means attached to the multiple managed components mounted detachably on the main body of the optical measurement apparatus, the management information of the managed component to which the recording means is attached, and is preferably executed by the recording means.

The recording means can be suitably selected depending on the type, size, shape, and structure of the managed component to which the recording means is attached and the type of the management information to be recorded, and examples thereof include a one-dimensional code, a two-dimensional code, an RFID tag, and an EEPROM.

The one-dimensional code is one that is expressed by aligning black bars and white spaces (blank spaces) of different thicknesses alternately. Since information is written only in one lateral (horizontal) direction, and there is no information in a height (vertical) direction of the bar, it is referred to as "one-dimensional barcode" or "barcode".

The two-dimensional code has information in both lateral (horizontal) and longitudinal (vertical) directions, has a high memory density, and can store much information in a small area. Examples thereof include a QR code (registered trademark).

The recorded management information of the one-dimensional code or the two-dimensional code cannot be rewritten, so that when the management information is to be changed, it is necessary to newly issue a one-dimensional code or a two-dimensional code in which the management information is rewritten and attach the same to the managed component.

The RFID (Radio Frequency Identifier) uses a contactless RFID (IC) tag that uses radio wave or electromagnetic wave as a medium of communicating information, so that, unlike barcodes, it is not susceptible to damage such as dissolution in organic solvents. Moreover, connection and routing of cables are unnecessary. The RFID tag is equivalent to an IC tag, and it may also be referred to as an RF tag.

The EEPROM (Electrically Erasable Programmable Read-Only Memory) is one type of a nonvolatile memory, and is also represented as E²PROM. In an electronic device such as a computer, it is used for memorizing data which needs to be memorized even when the electronic device is turned off such as setting information.

The management information can be rewritten when the RFID tag or the EEPROM is used as the recording means, so that it is superior in convenience. Rewriting of the management information may be performed inside the optical measurement apparatus, or the recording means may be taken out from the optical measurement apparatus to perform rewriting of the management information.

A method of attaching the recording means to the managed component is not particularly limited, can be suitably selected depending on the purpose, and examples thereof include sticking a sticker, affixing with adhesive, fixation with screws, and pinning. The recording means may be attached inside the managed component, or may be attached externally to the managed component.

### <Reading step and Reading means>

The reading step is a step of reading out, by each of multiple reading means disposed at positions corresponding to positions where the multiple recording means of the multiple managed components are attached, the management information recorded in the recording means attached to the position corresponding to the position where the reading means is disposed, when the managed component is mounted on the main body of the optical measurement apparatus or when measurement is performed with the measurement means while the managed component is mounted on the main body of the optical measurement apparatus, and is preferably performed by a reading means.

According to the reading step, the management information recorded in the recording means of the managed component can be read out automatically without omission, so that human errors such as input errors of the management information of the managed component, mix-up upon exchanging the managed component, expiration of calibration time-limit, expiration of exchange time-limit of the managed component, and mistake upon purchase order of the managed component can be prevented.

The reading means can be suitably selected depending on the type of the recording means, and examples thereof include a barcode reader, an RFID reader, an optical camera, and a reading apparatus.

The barcode reader is a reading means that reads out the management information recorded in a one-dimensional code and a two-dimensional code, which are the recording means.

The RFID reader is a reading means that reads out the management information recorded in an RFID tag, which is the recording means.

The optical camera is a reading means that reads out the management information recorded in a one-dimensional code and a two-dimensional code, which are the recording means.

The reading apparatus is a means that reads out the management information recorded in an EEPROM, which is the recording means.

When a contactless reading means composed of an RFID tag and an RFID reader is used, this configuration is effective for eliminating connection and routing cables and for preventing corrosion by water, and can be applied to small managed components such as a cell, a thermometer, and an optical rotation plate.

### <Measuring step and Measurement means>

The measuring step is a step of measuring an optical property of a sample by the measurement means of the optical measurement apparatus to acquire the measurement data, and is preferably executed by the measurement means.

The measurement data is data obtained by measuring the optical property of the sample, and indicates raw data of an optical property value.

Examples of the measurement data include items such as "measurement data ID", "type of sample", "optical property value", "measurement date and time", and "operator".

"Measurement data ID" is a sign consisting of numbers "0 to 9" and alphabets "A to Z" for identifying the measurement data, and is set in advance.

Examples of "type of sample" include a standard sample, a normal measurement sample, and a reference sample.

"Optical property value" can be suitably selected depending on the type of the optical measurement apparatus, and examples thereof include an optical rotation for a polarimeter, a CD value for a circular dichroism spectrometer, and transmittance (absorbance) for a spectrometer.

"Measurement date and time" is a date and time when the sample is measured.

"Operator" is a name of a person in charge who measured the sample.

The measurement means is suitably selected depending on the type of the optical measurement apparatus. For example, when the optical measurement apparatus is a "polarimeter", a polarizer is used to convert light from the light source to linearly polarized light, the linearly polarized light is incident to a sample solution in which a material whose optical rotation is to be measured is dissolved, the linearly polarized light that passes through the sample solution is incident to an analyzer, and an amount of light that passes through the analyzer is detected. By rotating the analyzer while the amount of light that passes through the analyzer is detected, and finding a rotation angle of the analyzer at which the amount of light that passes through the analyzer becomes zero, an angle by which the sample solution has rotated a plane of polarization of the linearly polarized light, i.e., an optical rotation of a material can be measured.

### <Storing step and Storing means>

The storing step is a step of storing historical data that is combined with read-out management information of the managed component and measurement data measured with a measurement means, and is preferably executed by a storing means.

The historical data is data that is combined with the measurement data and the management information, and the measurement data and the management information can be combined by software stored in a computer of the optical measurement apparatus.

When the managed component is mounted on the main body of the optical measurement apparatus, the management information recorded in the recording means is read out, the management information is stored in a computer, and the management information and the measurement data that is measured with the measurement means can be combined to generate the historical data.

Moreover, when measurement is performed with the measurement means while the managed component is mounted on the main body of the optical measurement apparatus, the management information recorded in the recording means is read out, and the management information and the measurement data can be combined to generate the historical data.

The historical data is preferably stored in no changes allowed state for ensuring strict traceability demanded in the pharmaceutical industry.

A method of storing the historical data in no changes allowed state is not particularly limited, generally known methods can be suitably used, and examples thereof include: storing the historical data in a read-only state, encryption of the historical data, or blockchain of the historical data.

The storing means is not particularly limited so long as the historical data can be stored, can be suitably selected depending on the purpose, and examples thereof include a solid-state drive (SSD), and a hard disk drive (HDD).

### <Providing step and Providing means>

The providing step is a step of providing corresponding historical data when the historical data is used or needed, and is preferably performed by a providing means.

Examples of times when the historical data is used or needed include: at daily inspection, at periodic inspection, at qualification test, when the managed component is exchanged, when the standard sample is calibrated, when repaired, and when the historical data is requested by a user.

Examples of providing by the providing means include display of the historical data on a screen of the optical measurement apparatus and warning regarding the historical data, or display of the historical data and warning regarding the historical data on a portable terminal.

Examples of an aspect of the warning include: when an expiration date of the managed component expires; when a calibration time-limit of the standard sample expires; when the measurement value of the standard sample is out of a set numerical range; and a cautionary message displayed before the expiration date of the managed component or the calibration time-limit of the standard sample (e.g., "the expiration date will expire in three months", etc.).

A method of warning is not particularly limited so long as abnormality can be notified to a user or a manager, can be suitably selected depending on the purpose, and examples thereof include: display of a warning mark on a screen; a warning sound by a speaker; and flashing of light.

The optical measurement apparatus of the present invention can be connected to a management system that manages usage of the optical measurement apparatus.

Examples of the management system include LIMS (Laboratory Information Management System), and ERP (Enterprise Resource Planning).

When the management system is comprised, the historical data that is combined with measurement data measured with the measurement means of the optical measurement apparatus and management information of multiple managed components can be collected in a centralized manner in the order of: the optical measurement apparatus, LIMS, and ERP, so that human errors such as input errors of the management information of the managed component, mix-up upon exchanging the managed component, expiration of a calibration time-limit, expiration of an exchange time-limit of the managed component, and mistakes upon purchase order of the managed component can be prevented.

### <Other steps and Other means>

Other means are not particularly limited, can be suitably selected depending on the purpose, and examples thereof include a communication means and an input means.

Other steps are not particularly limited, can be suitably selected depending on the purpose, and examples thereof include a communication step and an input step.

The communication means is not particularly limited so long as it can communicate with the outside of the optical measurement apparatus, a well-known communication means can be used suitably, and examples thereof include a transceiver.

The input means is not particularly limited so long as it can accept various requests to the optical measurement apparatus, a well-known input means can be used suitably, and examples thereof include a keyboard, a mouse, a touch panel, and a microphone.

### (Data management program of Optical measurement apparatus)

A data management program for the optical measurement apparatus of the present invention is a data management program of the optical measurement apparatus that stores historical data that is combined with the measurement data obtained by measuring the optical property of the sample with the measurement means of the optical measurement apparatus and the management information of the multiple managed components mounted detachably on the main body of the optical measurement apparatus, and can trace the historical data when the historical data is used or needed, the data management program causing a computer to execute processing of:
recording, in each of multiple recording means attached to the multiple managed components, the management information of the managed component to which the recording means is attached;
reading out, by each of multiple reading means disposed at positions corresponding to positions where the multiple recording means of the multiple managed components are attached, the management information recorded in the recording means attached to the position corresponding to the position where the reading means is disposed, when the managed component is mounted on the main body of the optical measurement apparatus or when measurement is performed with the measurement means while the managed component is mounted on the main body of the optical measurement apparatus; and
storing the historical data that is combined with the read-out management information and the measurement data measured with the measurement means.

The data management program of the optical measurement apparatus of the present invention may be a program causing a computer to execute the data management method of the optical measurement apparatus of the present invention, for example. Moreover, a preferred aspect in the data management program of the optical measurement apparatus of the present invention may be the same as the preferred aspect in the data management method of the optical measurement apparatus of the present invention, for example.

The data management program of the optical measurement apparatus of the present invention may be produced by using various well-known programming languages depending on the configuration of a computer system to be used, and types and versions of the operating system.

The data management program of the optical measurement apparatus of the present invention may be recorded in a recording medium such as an internal hard disk and an external hard disk, or may be recorded in a recording medium such as CD-ROM (Compact Disc ROM), DVD-ROM (Digital Versatile Disk ROM), MO disk (Magneto-Optical disk), SD card, and USB memory [USB (Universal Serial Bus) flash drive].

Furthermore, when the data management program of the optical measurement apparatus of the present invention is recorded in the above-described recording medium, it can be used directly via a recording-medium reading apparatus that is included in the computer system or by installing the same in a hard disk as necessary. Moreover, the data management program of the optical measurement apparatus of the present invention may be recorded in an external memory area (e.g., another computer) that can be accessed via an information communicating network from the computer system. In this case, the data management program of the optical measurement apparatus of the present invention that is recorded in the external memory area can be used directly via an information communicating network from the external memory area, or by installing the same to a hard disk.

The data management program of the optical measurement apparatus of the present invention may be divided for each optional processing and recorded in multiple recording media.

### <Recording medium that can be read by computer>

A computer-readable recording medium related to the present invention is formed by recording the data management program of the optical measurement apparatus of the present invention.

The computer-readable recording medium related to the present invention is not particularly limited, can be suitably selected depending on the purpose, and examples thereof include an internal hard disk, an external hard disk, CD-ROM, DVD-ROM, MO disk, SD card, and USB memory.

Moreover, the computer-readable recording medium related to the present invention may be multiple recording media of which the data management program of the optical measurement apparatus of the present invention is divided and recorded for each optional processing.

In the following, an example of the technique disclosed in the present invention is described in further detail by using configuration examples and flowcharts of the optical measurement apparatus of the present invention.

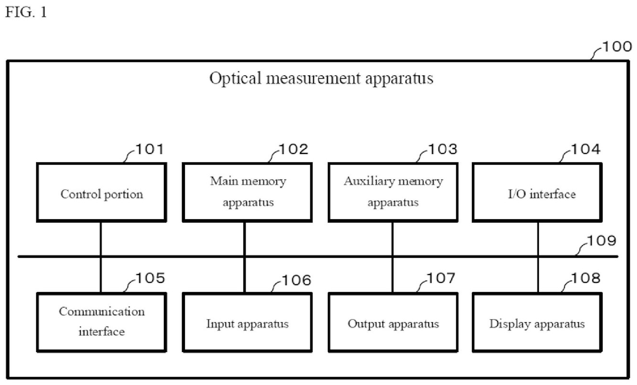

Figure 1 shows an example of hardware configuration of the optical measurement apparatus of the present invention.

In an optical measurement apparatus 100, for example, a control portion 101, a main memory apparatus 102, an auxiliary memory apparatus 103, an I/O interface 104, a communication interface 105, an input apparatus 106, an output apparatus 107, and a display apparatus 108 are connected via a system bus 109.

The control portion 101 performs an operation control of an arithmetic operation (four arithmetic operations, comparison operation), hardware, and software. For example, the control portion 101 may be a CPU (Central Processing Unit), a portion of a machine used in the data management method of the optical measurement apparatus of the present invention, or a combination thereof.

The control portion 101, for example, accomplishes various functions by executing a program loaded into the main memory apparatus 102 (e.g., the data management program of the optical measurement apparatus of the present invention).

Processing performed by a measuring portion consisting of a measurement means of the optical measurement apparatus of the present invention, a recording portion consisting of a recording means of the optical measurement apparatus, a reading portion consisting of a reading means of the optical measurement apparatus, and a storing portion consisting of a storing means of the optical measurement apparatus can be performed by the control portion 101, for example.

The main memory apparatus 102 stores various programs, and also stores data necessary for executing various programs. As the main memory apparatus 102, for example, one having at least one of a ROM (Read Only Memory) and a RAM (Random Access Memory) may be used.

ROM stores various programs such as BIOS (Basic Input/Output System), for example. Moreover, ROM is not particularly limited, can be suitably selected depending on the purpose, and examples thereof include a mask ROM, and a PROM (Programmable ROM).

RAM functions as a working area that is deployed when various programs stored in ROM or the auxiliary memory portion 103 are executed by the control portion 101. RAM is not particularly limited, can be suitably selected depending on purpose, and examples thereof include a DRAM (Dynamic Random Access Memory), and a SRAM (Static Random Access Memory).

The auxiliary memory apparatus 103 is not particularly limited so long as various information can be stored, can be suitably selected depending on the purpose, and examples thereof include a solid-state drive (SSD), and a hard disk drive (HDD). Moreover, the auxiliary memory apparatus 103 may be a portable memory apparatus such as a CD drive, a DVD drive, and a BD (Blu-ray (registered trademark) Disc) drive. Moreover, the data management program of the optical measurement apparatus of the present invention is, for example, stored in the auxiliary memory apparatus 103, loaded into RAM (main memory) of the main memory apparatus 102, and executed by the control portion 101.

The I/O interface 104 is an interface for connecting various external apparatuses. The I/O interface 104 enables input/output of data to and from CD-ROM, DVD-ROM, MO disk, SD card, and USB memory, for example.

The communication interface 105 is not particularly limited, a well-known communication interface can be used suitably, and examples thereof include a wireless or wired communication device.

The input apparatus 106 is not particularly limited so long as input of various requests and information to the optical measurement apparatus 100 can be accepted, a well-known input apparatus can be used suitably, and examples thereof include a keyboard, a mouse, a touch panel, and a microphone. Moreover, when the input apparatus 106 is a touch panel (touch display), the input apparatus 106 can also work as the display apparatus 108.

The output apparatus 107 is not particularly limited, a well-known output apparatus can be used suitably, and examples thereof include a printer.

The display apparatus 108 is not particularly limited, a well-known display apparatus can be used suitably, and examples thereof include a liquid crystal display, and an organic electroluminescence display.

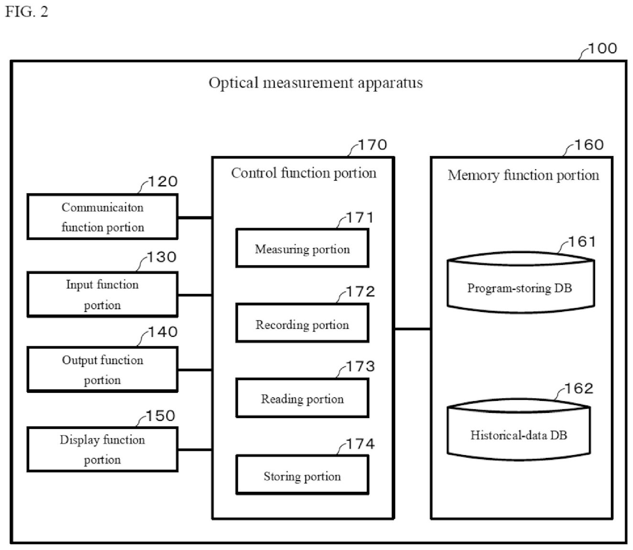

Figure 2 shows an example of functional configuration of the optical measurement apparatus of the present invention.

As shown in Figure 2, the optical measurement apparatus 100 comprises a communication function portion 120, an input function portion 130, an output function portion 140, a display function portion 150, a memory function portion 160 and a control function portion 170.

The communication function portion 120 sends and receives various data to/from an external apparatus, for example. Moreover, the communication function portion 120 may receive data from an external apparatus, for example.

The input function portion 130 accepts various instructions to the optical measurement apparatus 100, for example. Moreover, the input function portion 130 accepts information related to historical data to be traced, for example.

The output function portion 140 prints out the corresponding historical data, for example.

The display function portion 150 displays the corresponding historical data on a display, for example.

The memory function portion 160 has a program-storing database (DB) 161 that stores various programs, and a historical-data DB 162 that stores historical data that is combined with read-out management information of the managed component and measurement data measured with a measuring portion.

The control function portion 170 has a measuring portion 171 consisting of a measurement means of the optical measurement apparatus, a recording portion 172 consisting of a recording means of the optical measurement apparatus, a reading portion 173 consisting of a reading means of the optical measurement apparatus, and a storing portion 174 consisting of a storing means of the optical measurement apparatus. The control function portion 170, for example, executes various programs stored in the program-storing DB 161 of the memory function portion 160, and also controls operation of the entire optical measurement apparatus 100.

The measuring portion 171 performs processing of acquiring measurement data obtained by measuring the optical property of the sample with a measurement means of the optical measurement apparatus, for example.

The recording portion 172 performs processing of recording management information of a managed component in multiple recording portions that are attached respectively to multiple managed components, for example.

The reading portion 173 performs processing of reading out the management information recorded in the recording portion 172 by multiple reading portions that are disposed respectively at positions corresponding to positions where the recording means are attached to multiple managed components when the managed component is mounted on the main body of the optical measurement apparatus, or when measurement is performed with the measuring portion 171 while the managed component is mounted on the main body of the optical measurement apparatus.

The storing portion 174 performs processing of storing historical data that is combined with the read-out management information and the measurement data measured with the measuring portion 171.

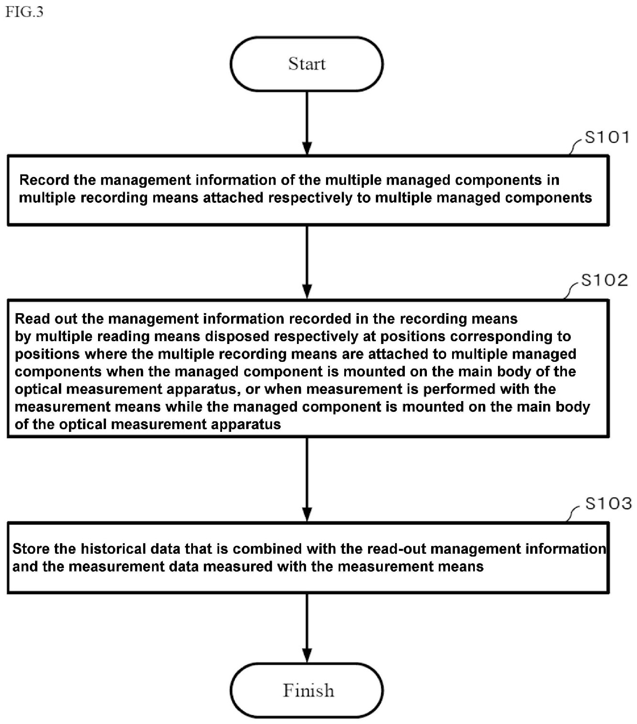

Here, Figure 3 is a flowchart that shows an example of a flow of processing in a data management method of the optical measurement apparatus of the present invention. In the following, a flow of processing in the data management method of the optical measurement apparatus is described with reference to the diagram of functional configuration of the optical measurement apparatus of Figure 2.

According to the data management method of the optical measurement apparatus of the present invention, process of storing historical data that is combined with measurement data obtained by measuring the optical property of the sample with a measurement means of the optical measurement apparatus, and management information of multiple managed components mounted detachably on the main body of the optical measurement apparatus, and process of tracing the historical data when the historical data is used or needed are performed.

In Step S101, the recording portion 172 of the control function portion 170 in the optical measurement apparatus 100 records the management information of the managed component in multiple recording portions 172 that are attached respectively to multiple managed components, and then proceeds to Step S102.

In Step S102, the reading portion 173 of the control function portion 170 in the optical measurement apparatus 100 reads out the management information recorded in the recording portion 172 by multiple reading portions that are disposed respectively at positions corresponding to positions where the multiple recording means are attached to multiple managed components when the managed component is mounted on the main body of the optical measurement apparatus, or when measurement is performed with the measuring portion 171 of the control function portion 170 in the optical measurement apparatus 100 while the managed component is mounted on the main body of the optical measurement apparatus, and then proceeds to Step S103.

In Step S103, the storing portion 174 of the control function portion 170 in the optical measurement apparatus 100 stores historical data that is combined with the read-out management information of the managed component and the measurement data measured with the measuring portion 171 of the control function portion 170 in the optical measurement apparatus 100, and then this processing is finished.

### Examples

In the following example, a polarimeter which is one embodiment of the optical measurement apparatus of the present invention is specifically described; however, the present invention is not limited to this example at all.

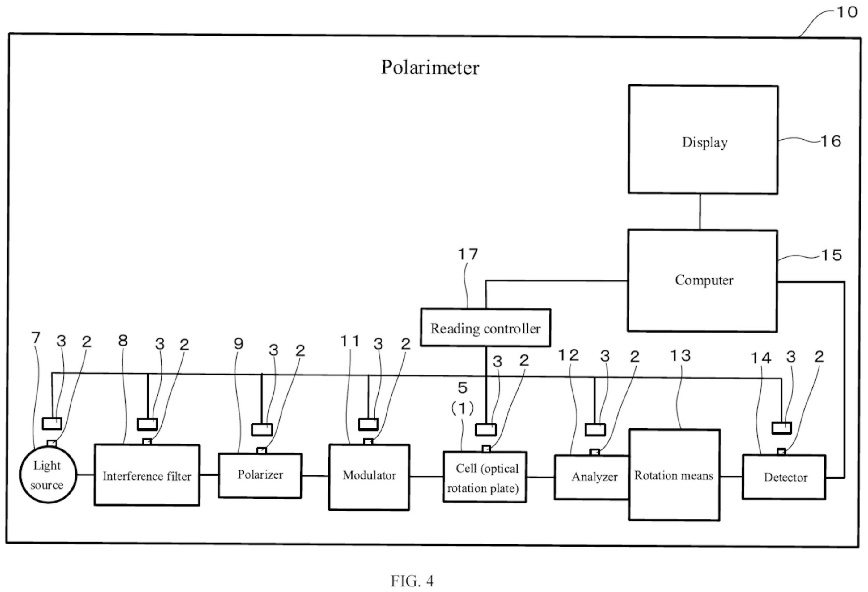

Figure 4 is a schematic diagram of a polarimeter, an embodiment of the optical measurement apparatus of the present invention. In this polarimeter 10 of Figure 4, a light source 7, an interference filter 8, a polarizer 9, a modulator 11, a cell 5, an analyzer 12, a rotation means 13, and a detector 14 are aligned and disposed along an optical path. The order of alignment of the modulator 11 and the cell 5 may be reversed. In this polarimeter 10, an optical rotation plate 1, which is a standard sample, is disposed at the position of the cell 5 when inspection or calibration is performed.

The light source 7 is an LED (Light Emitting Diode) that emits monochromatic light, and electric power for lighting is supplied from a lighting circuit, not shown, to emit light. Other than the LED, the light source 7 may be a light source such as a sodium lamp, a halogen lamp, or a mercury lamp.

The interference filter 8 is a bandpass optical filter that lets light of a wavelength (e.g., 589 nm) used for measuring an optical rotation pass through, and cuts off light of other wavelengths.

The polarizer 9 is a polarizing plate that transmits only a linearly polarized light component parallel to a single transmission axis, and converts the incident light that is emitted by the light source 7 and passed through the interference filter 8 to linearly polarized light. Accordingly, the linearly polarized light is generated. The polarizer 9 is fixed inside the polarimeter, and a direction of the transmission axis that is unique to the polarizer 9 is also fixed, so that a plane of polarization of the polarized light that is generated by the polarizer 9 is constant.

The modulator 11 is a Faraday coil that modulates the plane of polarization of the linearly polarized light. This Faraday coil is disposed at a position where the optical path passes through the inside, and is connected to an oscillator that supplies an alternating current. The oscillator supplies the alternating current with a predetermined frequency to the Faraday coil, and the Faraday coil generates an oscillating magnetic field inside it by being supplied with the alternating current. In the linearly polarized light that passes through the Faraday coil, the plane of polarization oscillates at an amplitude and frequency depending on the alternating current by the oscillating magnetic field.

The modulated linearly polarized light that has passed through the modulator 11 passes through the cell 5 which is filled with a liquid sample, and then passes through the analyzer 12.

The cell 5 is a transparent cell which is filled with a liquid sample, and is disposed at a position where the optical path passes through the liquid sample. The linearly polarized light that is generated by the light from the light source 7 passing through the polarizer 9 is incident to the cell 5.

The analyzer 12 is a polarizing plate having a single transmission axis, is rotated by a rotation stage as the rotation means 13 such that the direction of polarization of the polarizer 9 and the transmission axis direction of the analyzer 12 are perpendicular, and is disposed at its angle adjusted. Among the linearly polarized light that is incident to the analyzer 12, only the linearly polarized light component that is parallel to the transmission axis passes through the analyzer 12.

The linearly polarized light that passed through the analyzer 12 is incident to the detector 14. The detector 14 is configured with a light-receiving element such as a photomultiplier tube (PMT) or a photodiode, and outputs a detection signal that shows an amount of light received as a voltage when it detects light. The intensity of the light-reception signal that the light-receiving element outputs corresponds to the amount of light that the light-receiving element receives. An optical rotation is determined by the computer 15 based on an electric signal acquired by the detector 14.

In a state when there is no sample solution in the cell 5 and the transmission axes of the polarizer 9 and the analyzer 12 are perpendicular, light is cut off by the analyzer 12, and the light-receiving element detects only a negligible amount of light. When the sample solution having optical activity is injected into the cell 5, the plane of polarization of the linearly polarized light is rotated by the sample solution, the linearly polarized light component parallel to the transmission axis of the analyzer 12 passes through the analyzer 12, and the light-receiving element detects light. The analyzer 12 is rotated by the rotation means 13 in this state, and the rotation angle at which the analyzer 12 is rotated by the rotation means 13 until the plane of polarization of the linearly polarized light that has passed through the sample solution is perpendicular to the transmission axis of the analyzer 12 is obtained. The obtained rotation angle is an angle at which the sample solution in the cell 5 has rotated the plane of polarization of the linearly polarized light, and this is the optical rotation of the sample solution.

In the computer 15, a control (measurement) program of the polarimeter and the data management program of the optical measurement apparatus of the present invention are running.

The display 16 displays data and warnings.

In this polarimeter 10 of Figure 4, the light source 7, the interference filter 8, the polarizer 9, the modulator 11, the cell 5, the optical rotation plate 1, the analyzer 12 and the detector 14 correspond to the managed components that are mounted detachably on the main body of the polarimeter.

To the light source 7, the interference filter 8, the polarizer 9, the modulator 11, the cell 5, the optical rotation plate 1, the analyzer 12, and the detector 14, which are the multiple managed components, the recording means 2 to which the management information is recorded are attached respectively, and the management information recorded in the recording means 2 is read out by multiple reading means 3 that are disposed respectively at positions corresponding to positions where the recording means are attached to multiple managed components when each managed component is mounted on the main body of the optical measurement apparatus, or when measurement is performed with the measurement means while the managed component is mounted on the main body of the optical measurement apparatus. The read-out management information is transferred to the computer 15 via a reading controller 17. The measurement data measured with the measuring means is transferred to the computer 15. The management information and the measurement data are combined by software of the computer 15 to generate historical data. This historical data is stored in the historical-data DB 162 in the computer 15.

The acquired historical data can be sent to a LIMS (Laboratory Information Management System) as necessary. In a case of one-to-one communication such as RS232C, it is sent in plaintext as it is, and in a case of using an in-house LAN, it is sent as binary data together with format information.

When the historical data is sent to the LIMS, the historical data is not stored in the computer, so that management cost such as backup of the historical data can be reduced. The historical data acquired by the LIMS is sent to an ERP, calibration information, production information and expiration date of calibration are taken into account, and a slip form for recalibration may be issued to the user.

As the multiple recording means 2, any of a one-dimensional code, a two-dimensional code, an RFID tag, and an EEPROM is used.

As the multiple reading means 3, any of a barcode reader, an RFID reader, an optical camera and a reading apparatus is used to correspond to the recording means 2.

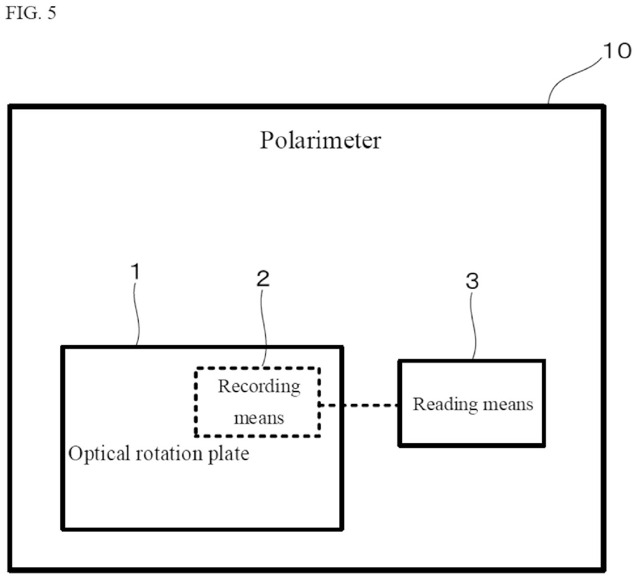

Figure 5 is a schematic diagram that shows an optical rotation plate 1, which is an example of the managed component of the polarimeter 10, the recording means 2, and the reading means 3. An RFID tag is attached to this optical rotation plate 1 as the recording means 2, and a type of the optical rotation plate, a unique number of the optical rotation plate, a calibration value (optical rotation) of the optical rotation plate, a calibration date and time of the optical rotation plate, a calibration time-limit of the optical rotation plate, information of a person who performed calibration of the optical rotation plate, and an exchange date and time of the optical rotation plate are recorded in this RFID tag as the management information. A one-dimensional code or a two-dimensional code can be used as the recording means 2; however, since an RFID tag is contactless and the management information can be rewritten, it is superior in convenience.

When the optical rotation plate 1 is mounted on the main body of the polarimeter, the management information of the RFID tag attached to the optical rotation plate 1 is read out by the RFID reader as the reading means 3, and historical data in which the read-out management information and the measurement data measured by the measurement means are combined is stored in the historical-data DB 162.

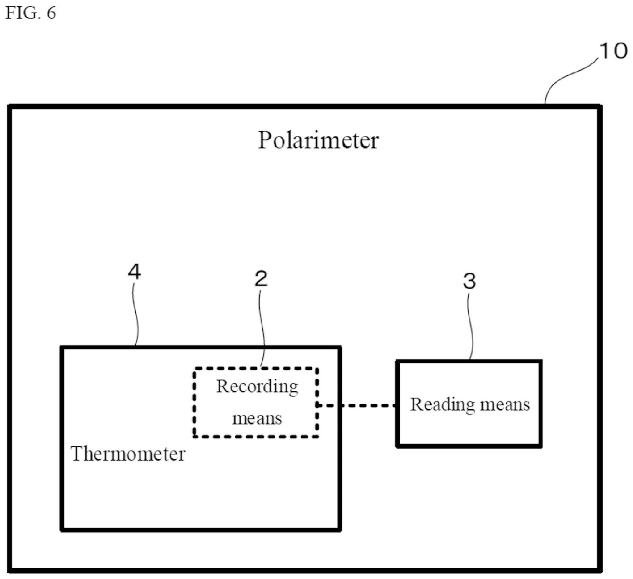

Figure 6 is a schematic diagram showing a thermometer 4, which is an example of the managed component of the polarimeter 10, a recording means 2, and a reading means 3. An RFID tag is attached to this thermometer 4 as the recording means 2, and a type of the thermometer, a unique number of the thermometer, a calibration value (temperature) of the thermometer, a calibration date and time of the thermometer, a calibration time-limit of the thermometer, information of a person who performed calibration of the thermometer, and an exchange date and time of the thermometer are recorded as the management information in this RFID tag. A one-dimensional code or a two-dimensional code can be used as the recording means 2; however, since the RFID tag is contactless and the management information can be rewritten, it is superior in convenience.

When the thermometer 4 is mounted on the main body of the polarimeter, the management information of the RFID tag attached to the thermometer is read out by the RFID reader as the reading means 3, and historical data in which the read-out management information and the measurement data measured by the measurement means are combined is stored in the historical-data DB 162.

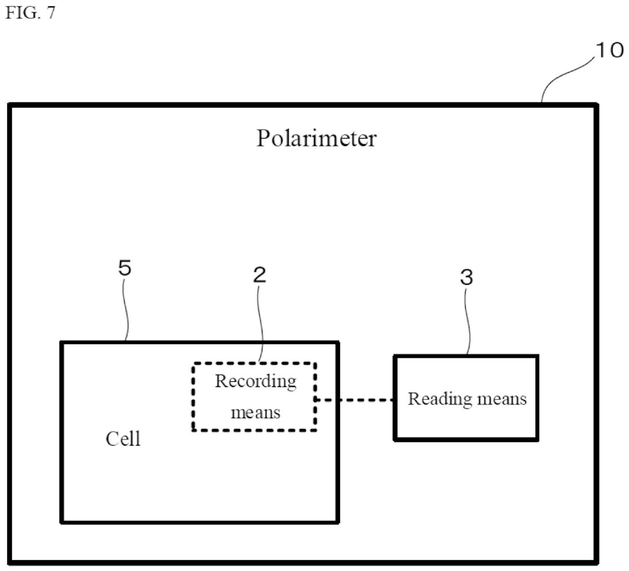

Figure 7 is a schematic diagram showing a cell 5, which is an example of the managed component of the polarimeter 10, the recording means 2, and the reading means 3. An RFID tag is attached to this cell 5 as the recording means 2, and a type of the cell, a unique number of the cell, temperature of the cell, a calibration value of an optical path length of the cell, a calibration date and time of the optical path length of the cell, a calibration time-limit of the optical path length of the cell, information of a person who performed calibration of the optical path length of the cell, and the exchange date and time of the cell are recorded as the management information in this RFID tag. A one-dimensional code or a two-dimensional code can be used as the recording means 2; however, since the RFID tag is contactless and the management information can be rewritten, it is superior in convenience.

When the cell is mounted on the main body of the polarimeter, the management information of the RFID tag attached to the cell is read out by the RFID reader as the reading means 3, and historical data in which the read-out management information and the measurement data are combined is stored in the historical-data DB 162.

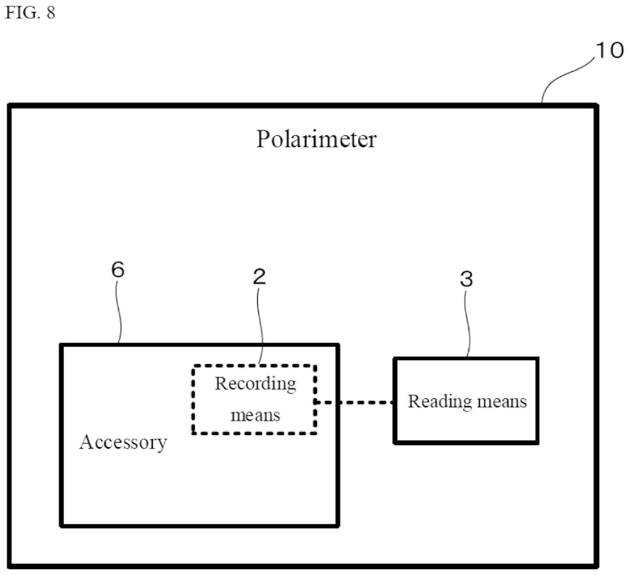

Figure 8 is a schematic diagram showing an accessory 6, which is an example of the managed component of the polarimeter 10, the recording means 2 and the reading means 3. A cell holder is used as the accessory 6. A two-dimensional code is attached to this cell holder as the recording means 2, and a type of the cell holder, a unique number of the cell holder, temperature of the cell holder, and an attachment date and time of the cell holder are recorded in this two-dimensional code as the management information. A one-dimensional code or an RFID tag can also be used as the recording means 2.

When the cell holder is mounted on the main body of the polarimeter, the management information of the two-dimensional code attached to the cell holder is read out by a barcode reader as the reading means 3, and historical data in which the read-out management information and the measurement data measured with the measurement means are combined is stored in the historical-data DB 162.

### Reference Signs List

- 1: Optical rotation plate
- 2: Recording means
- 3: Reading means
- 4: Thermometer
- 5: Cell
- 6: Accessory
- 7: Light source
- 8: Interference filter
- 9: Polarizer
- 10: Polarimeter
- 11: Modulator
- 12: Analyzer
- 13: Rotation means
- 14: Detector
- 15: Computer
- 16: Display
- 17: Reading controller
- 100: Optical measurement apparatus
- 101: Control portion
- 102: Main memory apparatus
- 103: Auxiliary memory apparatus
- 104: I/O interface
- 105: Communication interface
- 106: Input apparatus
- 107: Output apparatus
- 108: Display apparatus
- 109: System bus
- 160: Memory function portion
- 161: Program-storing database (DB)
- 162: Historical-data database (DB)
- 170: Control function portion
- 171: Measuring portion
- 172: Recording portion
- 173: Reading portion
- 174: Storing portion

## Claims

1. An optical measurement apparatus that stores historical data that is combined with measurement data obtained by measuring an optical property of a sample with a measurement means of the optical measurement apparatus and management information of multiple managed components mounted detachably on a main body of the optical measurement apparatus, and can trace the historical data when the historical data is used or needed, the optical measurement apparatus comprising:
multiple recording means attached to the multiple managed components for recording, in each of the multiple recording means, the management information of the managed component to which the recording means is attached;
multiple reading means disposed at positions corresponding to positions where the multiple recording means of the multiple managed components are attached, wherein each of the multiple reading means reads out the management information recorded in the recording means attached to the position corresponding to the position where the reading means is disposed, when the managed component is mounted on the main body of the optical measurement apparatus or when measurement is performed with the measurement means while the managed component is mounted on the main body of the optical measurement apparatus; and
a storage means for storing the historical data that is combined with the read-out management information and the measurement data measured with the measurement means.

2. The optical measurement apparatus according to claim 1, wherein the multiple managed components are two or more selected from a light source, a filter, a standard sample, a cell, a thermometer, and an accessory.

3. The optical measurement apparatus according to claim 2, wherein the management information is at least one selected from a unique number of the managed component, an expiration date of the managed component, an exchange date and time of the managed component, information of a person who exchanged the managed component, calibration information of the standard sample, calibration information of the thermometer, and calibration information of the cell.

4. The optical measurement apparatus according to claim 1, wherein the multiple recording means are any of a one-dimensional code, a two-dimensional code, an RFID tag, and an EEPROM.

5. The optical measurement apparatus according to claim 1, wherein the multiple reading means are any of a barcode reader, an RFID reader, an optical camera, and a reading apparatus.

6. The optical measurement apparatus according to claim 1, wherein the time when the historical data is used or needed is any of at daily inspection, at periodic inspection, at qualification test, when the managed component is exchanged, when the standard sample is calibrated, when repaired, and when the historical data is requested by a user.

7. The optical measurement apparatus according to claim 6, comprising a providing means for providing the corresponding historical data when the historical data is used or needed.

8. The optical measurement apparatus according to claim 7, wherein providing of the historical data is display of the historical data on a screen of the optical measurement apparatus and warning regarding the historical data, or display of the historical data and warning regarding the historical data on a portable terminal.

9. The optical measurement apparatus according to any one of claims 1 to 8, wherein the optical measurement apparatus is any of a polarimeter, a circular dichroism spectrometer, a linear dichroism spectrometer, a birefringence measurement apparatus, a polarization measurement apparatus, a Raman spectrometer, an Ultraviolet-Visible-Near Infrared spectrometer, an infrared spectrometer, and a fluorescence spectrometer.

10. A data management method for an optical measurement apparatus that stores historical data that is combined with measurement data obtained by measuring an optical property of a sample with a measurement means of the optical measurement apparatus and management information of multiple managed components mounted detachably on a main body of the optical measurement apparatus, and can trace the historical data when the historical data is used or needed, the data management method comprising:
a recording step of recording, in each of multiple recording means attached to the multiple managed components, the management information of the managed component to which the recording means is attached;
a reading step of reading out, by each of multiple reading means disposed at positions corresponding to positions where the multiple recording means of the multiple managed components are attached, the management information recorded in the recording means attached to the position corresponding to the position where the reading means is disposed, when the managed component is mounted on the main body of the optical measurement apparatus or when measurement is performed with the measurement means while the managed component is mounted on the main body of the optical measurement apparatus; and
a storing step of storing the historical data that is combined with the read-out management information and the measurement data measured with the measurement means.

11. A data management program for an optical measurement apparatus that stores historical data that is combined with measurement data obtained by measuring an optical property of a sample with a measurement means of the optical measurement apparatus and management information of multiple managed components mounted detachably on a main body of the optical measurement apparatus, and can trace the historical data when the historical data is used or needed, the data management program causing a computer to execute processing of:
recording, in each of multiple recording means attached to the multiple managed components, the management information of the managed component to which the recording means is attached;
reading out, by each of multiple reading means disposed at positions corresponding to positions where the multiple recording means of the multiple managed components are attached, the management information recorded in the recording means attached to the position corresponding to the position where the reading means is disposed, when the managed component is mounted on the main body of the optical measurement apparatus or when measurement is performed with the measurement means while the managed component is mounted on the main body of the optical measurement apparatus; and
storing the historical data that is combined with the read-out management information and the measurement data measured with the measurement means.
